# EUROPÄISCHE PATENTSCHRIFT

(11) **EP 2 536 554 B1**
(45) Veröffentlichungstag und Bekanntmachung des Hinweises auf die Patenterteilung: **04.05.2016**
(21) Anmeldenummer: 11704224.2
(22) Anmeldetag: 17.02.2011
(51) Int. Cl.: B29D 29/06, B29C 55/04, B29C 70/50, B65G 15/36, B65H 59/18

(54) **ANLAGE UND VERFAHREN ZUM HERSTELLEN VON FÖRDERGURTEN MIT STAHLSEILEINLAGE**
SYSTEM AND METHOD FOR MANUFACTURE OF CONVEYOR BELTS WITH STEEL CABLE INSERT
SYSTEME ET PROCEDE DE FABRICATION DES BANDES TRANSPORTEUSES AVEC ARMURE EN ACIER

(30) Priorität: 05.10.2010 DE 102010037986; 18.02.2010 DE 102010008531
(43) Veröffentlichungstag der Anmeldung: 26.12.2012
(73) Patentinhaber: Siempelkamp Maschinen- und Anlagenbau GmbH, 47803 Krefeld (DE)
(72) Erfinder: HIRSCHKA, Gerhard, 47877 Willich (DE); AUMÜLLER, Steffen, 41464 Neuss (DE); WEISS, Axel, 47877 Willich (DE)
(74) Vertreter: von dem Borne, Andreas
(86) Internationale Anmeldenummer: PCT/EP2011/052357
(87) Internationale Veröffentlichungsnummer: WO 2011/101410

(56) Entgegenhaltungen:
- DE-A1- 1 921 969
- DE-A1- 2 254 027
- DE-A1- 2 258 413
- US-A- 2 102 680
- US-A- 3 687 394
- US-A- 3 941 637
- US-A1- 2005 034 805
- US-A1- 2009 102 402

## Beschreibung

Die Erfindung betrifft eine Anlage zum Herstellen von Fördergurten mit Seileinlage, z. B. Stahlseileinlage, nach dem Oberbegriff des Anspruches 1, mit zumindest
- einer Seilabwickelvorrichtung mit mehreren Seilspulen, von denen die in den Fördergurt einzubettenden Seile abgewickelt werden,
- einer Zusammenführvorrichtung bzw. Belegevorrichtung, in welcher die unter Zugspannung stehenden und in Gurtlängsrichtung parallel zueinander in einer Ebene verlaufenden Seile mit einer oder mehreren Rohgummibahnen zu einem Rohgurt zusammengeführt werden,
- einer Vulkanisierpresse, in welcher der Rohgurt mittels Druck und/oder Wärme unter Bildung des Fördergurtes vulkanisiert.

Seile meint im Rahmen der Erfindung strangförmige Zugträger, die als Verstärkungsseile in die Fördergurte eingebettet werden bzw. eingebettet sind und die in der Regel aus zusammengedrehten bzw. verdrillten Drähten oder Fasern bestehen. Sie verlaufen in Fördergurtlängsrichtung. Bevorzugt handelt es sich um Stahlseile. Die Erfindung umfasst aber auch andere Seilarten, z. B. Seile aus Kunstfasern bzw. polymeren Fasern (z. B. Aramidfasern oder Polypropylenfasern), aus Kohlenstofffasern oder auch aus mineralischen Fasern.

Im Zuge der Herstellung von Fördergurten bzw. Förderbändern aus Gummi mit Seileinlage bzw. Stahlseileinlage werden eine Vielzahl von Seilen bzw. Stahlseilen in der Seilabwickelstation, die auch als Spulengatter bezeichnet wird, von den einzelnen Seilspulen abgewickelt und die einzelnen Seile werden anschließend in Gurtlängsrichtung verlaufend und parallel zueinander in einer Ebene unter Bildung eines "Seilteppichs" ausgerichtet, welcher dann in der Zusammenführvorrichtung bzw. Belegevorrichtung mit den Rohgummibahnen zusammengeführt wird. Während des Zusammenführens und auch während des anschließenden Pressens bzw. Vulkanisierens, stehen die Seile unter einer vorgegebenen Zugspannung.

Bei einer aus der DE 30 37 611 C1 bekannten Anlage zum Herstellen von Fördergurten mit Stahlseileinlage der eingangs beschriebenen Art, ist zwischen der Seilabwickelvorrichtung und der Zusammenführvorrichtung, die dort als Belegestation bezeichnet wird, eine Seilspannvorrichtung mit Seilklemmvorrichtung angeordnet. Hinter der Vulkanisierpresse ist eine Klemmdurchzugsvorrichtung vorgesehen. Die Vulkanisierpresse ist als Taktpresse ausgebildet und auch die Belegevorrichtung arbeitet taktweise. Die erforderliche Zugspannung der Stahlseile wird bei der bekannten Vorrichtung mithilfe der Seilspannvorrichtung bei "stehender Anlage" erzeugt. Nachdem mithilfe der Vulkanisierheizpresse ein Förderbandabschnitt hergestellt wurde, wird die Presse geöffnet und bei entspannter Seilspannvorrichtung und geöffneter Seilklemmvorrichtung wird der Fördergurt durch Betätigen der Durchzugsvorrichtung um die Länge des zuletzt vulkanisierten Fördergurtabschnittes vortransportiert, wobei zugleich der fertige Fördergurt um eine entsprechende Länge in der Aufwickelstation aufgewickelt wird, der nächste zu vulkanisierende Abschnitt des Fördergurtrohlings in die Vulkanisierheizpresse eingezogen, die Belegestation um eine entsprechende Weglänge zur Vulkanisierheizpresse hin vorfährt und die Stahlseile über Kammwalzen von den Stahlseilspulen entsprechend nachgezogen werden. Anschließend wird zur Beseitigung eventueller Durchhänge der Stahlseile der Motor im Spulengatter betätigt, so dass die Stahlseilspulen entgegen Stahlseilabzugsrichtung angetrieben werden. Anschließend wird nun die in die Seilspannvorrichtung integrierte Seilklemmvorrichtung geschlossen und alle zwischen der Durchzugsvorrichtung und der Seilklemmvorrichtung liegenden Stahlseilabschnitte werden mithilfe der Seilspannvorrichtung gespannt. In diesem gespannten Zustand werden die Stahlseile dann mit dem Rohgummi belegt. Bei einer derartigen Anlage ist es dann erforderlich, die Seile nach dem Belegen nochmals zu entspannen, um den Rohgurt in die Presse zu transportieren. Dort müssen die Seile dann wieder gespannt werden.

Um einen einwandfreien Lauf der hergestellten Förderbänder im späteren Betrieb zu erreichen, ist eine gleichmäßige Spannungsverteilung bei sämtlichen eingebetteten Verstärkungsseilen von besonderer Bedeutung. Aus diesem Grunde wurde in der DE 198 28 736 A1 bereits vorgeschlagen, jedem Verstärkungsseil eine die Seilspannung ermittelnde Messvorrichtung zuzuordnen, wobei die Messvorrichtung unter Zwischenschaltung eines Prozessrechners an eine gesteuerte oder geregelte Stellvorrichtung angeschlossen ist und wobei die Stellvorrichtung auf die jeweilige Spannrolle tragende Spannaggregat arbeitet.

Aus der US 3 941 637 A und der DE 22 58 413 A1 kennt man eine Anlage zum Herstellen von Fördergurten mit den Merkmalen des Oberbegriffes des Patentanspruches 1. Die Anlage weist eine Seilabwickelvorrichtung, eine Zusammenführvorrichtung und eine Vulkanisierpresse auf. Der Abwickelvorrichtung, die ein Gestell und die Spulen aufweist, ist eine separate Spannvorrichtung nachgeschaltet, die als elektromechanische Bremse ausgebildet ist, wobei die Seile durch Gewichte gravimetrisch gespannt werden. Außerdem sind elektromagnetische Walzen vorgesehen, die ein unkontrolliertes Abwickeln der Spulen beim Spann- sowie Durchzugsvorgang verhindern.

Die US 3 687 394 A beschreibt im Übrigen eine ähnliche Anlage, bei der jedoch mit Druckluftantrieben gearbeitet wird.

Die aus der Praxis bekannten Anlagen der eingangs beschriebenen Art haben sich grundsätzlich bewährt, sie sind jedoch weiter entwicklungsfähig.

Der Erfindung liegt die Aufgabe zugrunde, eine Anlage zum Herstellen von Fördergurten mit Seileinlage, z. B. Stahlseileinlage der eingangs beschriebenen Art zu schaffen, welche bei konstruktiv vereinfachtem Aufbau die Herstellung von Fördergurten mit hoher Qualität ermöglicht.

Zur Lösung dieser Aufgabe lehrt die Erfindung bei einer gattungsgemäßen Anlage zum Herstellen von Fördergurten mit Seileinlage, z. B. Stahlseileinlage, dass die Seilabwickelvorrichtung als Seilabwickel- und Spannvorrichtung ausgebildet ist, in welcher jedes Seil einzeln auf die erforderliche Produktionsspannung gespannt wird, wobei D die einzelnen Seilspulen jeweils mit zumindest einem Spannantrieb oder Antriebsaggregat ausgerüstet sind, mit welchem zur Erzeugung der erforderlichen Produktionsspannung des Seils das erforderliche Spannmoment einstellbar ist, wobei die Seilabwickel- und Spannvorrichtung mit einer oder mehreren Seilzugmessvorrichtungen ausgerüstet, mit welchen die Zugspannung der einzelnen Seile messbar ist, wobei jedem Seil eine Messstelle zugeordnet ist, wobei die Seilabwickel- und Spannvorrichtung mit einer Steuer- und/oder Regelvorrichtung ausgerüstet ist, welche mit einerseits der Seilmessvorrichtung bzw. den Messstellen und andererseits den Spannantrieben verbunden ist.

Die Erfindung geht dabei zunächst einmal von der Erkenntnis aus, dass sich der konstruktive Aufbau einer Anlage zum Herstellen von Fördergurten mit Seileinlage, z. B. Stahlseileinlage erheblich vereinfachen lässt, wenn die Funktion der Seilabwickelstation erweitert wird, indem dort nicht nur die Seile abgewickelt und ggf. zur Vermeidung eines Durchhangs gespannt werden, sondern bereits die erforderlichen Produktionsspannungen und folglich die gewünschten Bandzüge eingestellt werden. Auf die in der Praxis bislang vorgesehene, separate Seilspannstation mit integrierter Seilklemme kann folglich verzichtet werden, so dass der Aufbau der Anlage insgesamt vereinfacht und die Anlage verkürzt werden kann. Die bislang im Spulengatter vorgesehenen Antriebe, die ein Spannmoment lediglich zur Vermeidung eines Durchhangs aufgebracht haben, werden durch leistungsfähige elektromotorische Antriebe ersetzt, die die erforderlichen Drehmomente zur Erzeugung der hohen Seilspannungen aufbringen können. Diese Spannantriebe sind vorzugsweise als elektromotorische Synchronmotoren ausgebildet, die vorzugsweise jeweils mit einem Frequenzumrichter ausgerüstet oder verbunden werden, um die einzelnen Seilspannungen gezielt einstellen zu können. Der Verzicht auf eine herkömmliche Spannvorrichtung mit Seilklemme hat zudem den Vorteil, dass die Spannung während des Transportes aufgebaut und auch gehalten werden kann. Es ist folglich nicht mehr erforderlich, die Seile zeitweise wieder zu entspannen, wenn ein bestimmter Abschnitt weiter transportiert wird. So wird z. B. auch ein kontinuierlicher Betrieb möglich.

Um die Funktionalität der Anlage weiter zu erhöhen und die Qualität der hergestellten Fördergurte weiter zu verbessern ,ist erfindungsgemäß vorgesehen, die Seilabwickel- und Spannvorrichtung mit einer oder mehreren Seilzugmessvorrichtungen auszurüsten, mit welchen die Zugspannung der einzelnen Seile messbar ist, wobei vorzugsweise jedem Seil eine separate Messstelle zugeordnet ist. Auch diese Seilzugmessvorrichtung wird folglich mit in die Seilabwickelvorrichtung bzw. die neue Seilabwickel- und Spannvorrichtung integriert. Damit besteht die Möglichkeit, die tatsächlichen Seilspannungen gezielt zu überwachen und besonders bevorzugt eine Seilspannungssteuerung und/oder Seilspannungsregelung in die Seilabwickelvorrichtung zu integrieren. Dazu ist die Seilabwickel- und Spannvorrichtung v mit einer Steuer- und Regeleinrichtung ausgerüstet, welche mit einerseits den Seilzugmessvorrichtungen und andererseits den Spannantrieben bzw. Antriebsaggregaten verbunden ist. Durch eine Überwachung und Auswertung der tatsächlich auftretenden Seilspannungen der jeweiligen Einzelseile besteht die Möglichkeit, einen Seilteppich mit exakt den gewünschten Produktionsspannungen sämtlicher Einzelseile, z. B. mit exakt identischer Zugspannung sämtlicher Einzelseile oder auch einem gewünschten "inhomogenen" Bandzugprofil über die Fördergurtbreite einzustellen, und zwar ohne separate Seilspannstation zwischen Seilabwickelvorrichtung und Zusammenführstation. Mithilfe der Auswertung der Seilzugmessvorrichtungen lassen sich exakt die gewünschten Seilzüge über die Seilspulen bzw. deren Antriebe einstellen, und zwar auch dann, wenn je nach Abwickeldurchmesser an den verschiedenen Seiltrommeln aus den gleichen Drehmomenten unterschiedliche Spannkräfte resultieren.

Mit der erfindungsgemäßen Seilabwickel- und Spannvorrichtung lassen sich ganz gezielt Seilspannungen bzw. Spannkräfte von z. B. bis zu 4.000 N pro Seil erzeugen, und zwar ohne separate Seilspannstation. Typische Einzelseilspannungen bzw. Spannkräfte liegen zwischen 800 und 4.000 N, und zwar in Abhängigkeit vom Seildurchmesser. Der Seildurchmesser beträgt z. B. 2 bis 18 mm, vorzugsweise 2,5 bis 15 mm.

Die Seilabwickelvorrichtung weist in an sich bekannter Weise ein Seilabwickelgestell auf, in welchem die Seilspulen drehbar und über Spannantriebe angetrieben angeordnet sind. Dabei schlägt die Erfindung nun vor, dass die Seilzugmessvorrichtung in das Seilabwickelgestell integriert ist, z. B. an dem ausgangsseitigen Ende des Seilabwickelgestells angeordnet ist. Ausgangsseitig ist ein solches Seilabwickelgestell in der Regel mit Seilführungsrollen ausgerüstet, die beispielsweise als Kammrollen bzw. Kammwalzen ausgebildet sind. Die Erfindung schlägt nun vor, in diesem Bereich der Anlage die Seilzugmessvorrichtungen zu integrieren. Dazu können die Seilzugmessvorrichtungen mit mehreren, den einzelnen Seilen jeweils zugeordneten Messstellen, z. B. Messtastern ausgerüstet sein. Diese Messtaster können z. B. von Messscheiben oder Messrollen gebildet werden, welche jeweils mit Kraftmessdosen verbunden sein können.

Besonders bevorzugt sind die Seilzugmessvorrichtungen nach Art eines Seildreiecks ausgebildet. Sie weisen zumindest zwei in Laufrichtung hintereinander angeordnete Führungsrollen auf, zwischen denen die Messtaster auf die Seile drückend um ein vorgegebenes Maß eintauchen. Mit den Messtastern werden dann die von den Seilen erzeugten Rückstellkräfte gemessen. Besonders bevorzugt sind die Führungsrollen und der dazwischen eintauchende Messtaster, z. B. eine Messscheibe, in fester Geometrie angeordnet und folglich fixiert, und zwar derart, dass das durchlaufende Seil zwischen den Führungsrollen von dem Messtaster ausgelenkt wird. Die im Zuge dieser Auslenkung erzeugte Rückstellkraft wird mithilfe des an z. B. eine Kraftmessdose angeschlossenen Messtasters gemessen. Der auf diese Weise erzeugte Messwert dient dann der Steuerung und/oder Regelung der Seilspannung, wie zuvor beschrieben.

Als Spannantriebe werden in der Regel Motor/Getriebe-Kombinationen (im Sinne eines Antriebsaggregates) eingesetzt. Um die einzelnen Seilspannungen zu regeln, ist es wie erläutert zweckmäßig, die einzelnen Motoren jeweils mit einem Frequenzumrichter auszurüsten. Je nach Ausführung der Motoren-Frequenzumrichter-Kombination wird nun der Messwert der Seilspannung direkt an den Motor übermittelt und dezentral geregelt oder an eine zentrale PLC-Steuerung übermittelt und die ermittelten Stellgrößen an die Frequenzumrichter der einzelnen Motoren geleitet. Die Regelung kann einem durch die zentrale PLC-Steuerung vorgegebenen Sollwert folgen.

Hinter der Vulkanisierpresse ist - insbesondere wenn diese als Taktpresse ausgebildet ist - vorzugsweise eine Durchzugsvorrichtung angeordnet. Die Seile werden dann mit der beschriebenen Seilabwickel- und Spannvorrichtung zwischen dieser Seilabwickel- und Spannvorrichtung und der Durchzugsvorrichtung auf die Produktionsspannung gespannt.

Zwischen der Seilabwickel- und Spannvorrichtung und der Zusammenführstation, in welcher die Stahlseile mit den Rohgummibahnen zusammengeführt werden, ist in der Regel eine Ausrichtvorrichtung mit zumindest einem Spreizkamm angeordnet. Mit diesem Spreizkamm werden werden die Seilabstände verändert, vorzugsweise verringert, ggf. jedoch auch vergrößert. In der Regel werden mit dem Spreizkamm die gewünschten Produktionsabstände der Seile eingestellt, bevor die Seile in die Zusammenführstation einlaufen. Denn in der Regel weisen die Einzelseile beim Auslaufen aus der Seilabwickelvorrichtung bzw. der Spannvorrichtung einen Abstand auf, der (noch) nicht dem gewünschten Produktionsabstand entspricht. Die Produktionsbreiten der Fördergurte sind meistens geringer als die Breiten der Seilabwickelvorrichtungen bzw. Spannvorrichtungen, so dass eine "Verengung des Seilteppichs" erforderlich ist, die mithilfe der Ausrichtvorrichtung realisiert wird. Eine solche Ausrichtvorrichtung weist einen Spreizkamm auf. Der Spreizkamm kann in bekannter Weise als feste Stahlleiste mit aufgeschweißten Zinken ausgeführt sein oder als Leiste mit eingefrästen Nuten. Da die Einzelseile im Zuge der Verengung des Seilteppichs unterschiedlich stark an den Zinken umgelenkt werden, treten unterschiedliche Reibungskräfte auf, die zu einer mehr oder weniger starken Veränderung der Seilspannung führen. Je stärker die Umlenkung an dem Zinken des Kamms ist, desto größer ist die Veränderung der Seilspannung. Um zu vermeiden, dass diese Bandzugveränderungen im Zuge der Umlenkung zu einer unerwünschten Beeinflussung der Zugspannungen der Einzelseile im Zuge des weiteren Produktionsprozesses führen, schlägt die Erfindung in bevorzugter Weiterbildung vor, dass die Seilspannung in der Seilabwickel- und Spannstation mit der Maßgabe eingestellt oder geregelt wird, dass unter Berücksichtigung der Änderung der Seilspannung in dem Spreizkamm hinter dem Spreizkamm die gewünschten Produktionsspannungen gegeben sind. Die Erfindung betrifft folglich nicht nur eine Anlage, sondern auch ein Verfahren zur Herstellung von Fördergurten mit Seileinlage, z. B. Stahlseileinlage, wobei die Seilspannung der einzelnen Seile gemessen und unter Berücksichtigung der Messergebnisse in der Seilabwickel- und Spannvorrichtung auf einen gewünschten Sollwert bzw. gewünschte Sollwerte geregelt werden. Die Einstellung bzw. Regelung der Seilspannungen im Seilabwickelgestell erfolgt - wie beschrieben - besonders bevorzugt unter Berücksichtigung der anschließenden Spannungsveränderungen in der Ausrichtvorrichtung bzw. im Spreizkamm. Sollen beispielsweise vor dem Belegen des Seilteppichs, z. B. Stahlseilteppichs mit Rohgummi sämtliche Seile bzw. Stahlseile eine identische Zugspannung aufweisen, so wird - unter Berücksichtigung der Veränderungen der Zugspannung im Spreizkamm - in der Seilabwickel- und Spannvorrichtung ganz gezielt ein über die Breite inhomogenes Zugspannungsprofil des Seilteppichs eingestellt. Es besteht jedoch alternativ auch die Möglichkeit, ganz gezielt ein inhomogenes Profil der Seilspannungen über die Breite des Seilteppichs im Bereich der Belegestation einzustellen. So kann es gewünscht sein, Fördergurte mit inhomogener Seilspannung herzustellen. Auch dieses ist mit der erfindungsgemäßen Anlage und dem erfindungsgemäßen Verfahren ohne Weiteres mit hoher Genauigkeit möglich.

Auch wenn im Rahmen der Erfindung die Möglichkeit besteht, die Spannungsveränderungen im Bereich des Spreizkamms rechnerisch und anschließend mithilfe der Spannvorrichtungen zu kompensieren, besteht die Möglichkeit, den herkömmlichen Spreizkamm mit festen Zinken durch einen "reibungsmindernden" Rollenkamm zu ersetzen. Einzelheiten werden in der Figurenbeschreibung erläutert.

Die Zusammenführstation bzw. Belegestation, in welcher die Seile bzw. der Seilteppich mit den Rohgummibahnen zusammengeführt wird, kann in an sich bekannter Weise als taktweise arbeitende Belegestation mit einem hin- und herfahrenden Konfektionswagen ausgebildet sein. Alternativ kann jedoch auch eine kontinuierlich arbeitenden Zusammenführvorrichtung vorgesehen sein. Dazu wird auf die Figurenbeschreibung verwiesen.

Schließlich besteht im Rahmen der Erfindung die Möglichkeit, dass die Vulkanisierpresse in an sich bekannter Weise als taktweise arbeitende Vulkanisierpresse ausgebildet ist. Dann werden die vorgegebenen Produktionsspannungen der einzelnen Seile zwischen einerseits der Seilabwickelstation und andererseits der nachgeschalteten Durchzugsvorrichtung im stehenden Zustand bei geöffneter Vulkanisierpresse eingestellt. Die Erfindung umfasst jedoch auch Ausführungsformen mit kontinuierlich arbeitenden Vulkanisierpressen. Auch dazu wird auf die Figurenbeschreibung verwiesen.

Die Seilabwickelstation weist eine Vielzahl von Seilabwickeleinheiten auf, die jeweils aus Seilspule und Antriebsaggregat zusammengesetzt sind.

Es liegt im Rahmen der Erfindung, für die Seilabwickelstationen bzw. deren Seilabwickeleinheiten als Antriebsaggregate Motor-/Getriebe-Kombinationen einzusetzen, die über eine normierte Abtriebswelle verfügen, die als Vielkeilwelle, Hohlwelle oder Passfederwelle ausgebildet sein kann. Die einzelnen Seilspulen sind auf separaten, eigenen Wellen gelagert bzw. an separaten, eigenen Wellen drehfest befestigt, so dass es dann erforderlich ist, die normierte Abtriebswelle drehfest mit der Spulenwelle zu verbinden.

In bevorzugter Alternative lehrt die Erfindung jedoch, dass die Seilspule unmittelbar auf die in das Getriebe integrierte und aus dem Getriebe vorkragende Abtriebswelle aufgesteckt ist. Die Erfindung geht bei diesem Aspekt von der Erkenntnis aus, dass der Aufbau einer Seilabwickeleinheit optimiert werden kann, indem darauf verzichtet wird, das Getriebe mit einer normierten Abtriebswelle auszurüsten, die an dann erforderliche Spulenwelle drehfest angeschlossen wird. Im Rahmen der Erfindung wird nun vielmehr bevorzugt die aus dem Getriebe herausgeführte Abtriebswelle des Getriebes unmittelbar für die Lagerung und den Antrieb der Seilspule verwendet. Die aus dem Getriebe herausgeführte Abtriebswelle wird folglich so angepasst, dass die Seilspule unmittelbar auf dieser Abtriebswelle angeordnet und befestigt werden kann. Unter Berücksichtigung der Tatsache, dass in einer Seilabwickelstation eine Vielzahl einzelner Seilabwickeleinheiten vorgesehen sind, die jeweils mit einem Antriebsaggregat ausgerüstet sind, kann auf wirtschaftliche Weise gleichsam ein "customized" Antriebsaggregat mit für den Anwendungszweck angepasster Abtriebswelle wirtschaftlich zur Verfügung gestellt werden, so dass auf eine separate Spulenwelle verzichtet werden kann. Auf diese Weise wird eine extrem platzsparende Bauform realisiert und die erforderliche Teilevielfalt wird minimiert.

Dazu schlägt die Erfindung vor, dass die in das Getriebe integrierte Abtriebswelle um eine vorgegebene Länge aus dem Getriebe vorkragt, welche vorzugsweise zumindest der Breite der Seilspulen entspricht oder größer ist. Die in das Getriebe integrierte Abtriebswelle ist folglich so dimensioniert, dass sie in stabiler Weise die Seilspulen aufnimmt. Dieses ist auch deshalb von Bedeutung, weil die Seilspulen im Seilabwickelgestell in der Regel lediglich "einseitig" abgestützt sind.

Die erfindungsgemäßen Seilabwickeleinheiten ermöglichen es in besonders einfache Weise durch Einsatz leistungsfähiger elektromotorischer Antriebe und geeigneter Getriebe unmittelbar die erforderlichen Drehmomente zur Erzeugung hoher Seilspannungen aufzubringen, so dass die Antriebsaggregate als "echte" Spannantriebe ausgebildet sind, mit welchen tatsächlich die erforderlichen Produktionsspannungen aufgebracht werden.

Um in einfacher Weise Drehmomente mit der Welle auf die Seilspule übertragen zu können, schlägt die Erfindung in einer ersten Ausführungsform vor, dass die Abtriebswelle als profilierte Welle ausgebildet ist und zur Drehmomentübertragung drehfest und formschlüssig in eine korrespondierende Spulenausnehmung der Seilspule eingreift. Profilierte Welle meint im Rahmen der Erfindung eine im Querschnitt profilierte Welle, die folglich einen von der Kreisform abweichenden Querschnitt, z. B. einen mehreckigen Querschnitt aufweist. Die Spulenausnehmung weist einen korrespondierenden Querschnitt, z. B. ebenfalls einen mehreckigen Querschnitt auf, so dass die Abtriebswelle formschlüssig und drehfest in die Spulenausnehmung einsteckbar ist. Die Seilspule lässt sich folglich einfach und lösbar auf der Abtriebswelle montieren und es lassen sich einfach und effizient Drehmomente auf die Seilspule übertragen. Die Abtriebswelle kann aus hochfestem Stahl gefertigt sein.

Alternativ kann die Abtriebswelle im Rahmen einer zweiten Ausführungsform als unprofilierte Glattwelle ausgebildet sein. Unprofilierte Welle meint im Rahmen der Erfindung, dass die Welle einen runden Querschnitt aufweist. Diese Abtriebswelle mit rundem Querschnitt ist vorzugsweise aus hochfestem Stahl mit einer glatten Oberfläche ausgebildet. Diese Ausführungsform eignet sich in besonderem Maße, wenn mit herkömmlichen Seilspulen mit im Querschnitt runden Spulenausnehmungen bzw. Spulenbohrungen gearbeitet werden soll. Auch die auf diese Abtriebswellen aufgesetzten Seilspulen werden drehfest (aber lösbar) an den Abtriebswellen befestigt. Dieses erfolgt vorzugsweise mit einem Mitnehmer, der drehfest an der Abtriebswelle befestigt oder befestigbar ist. Um eine Beeinträchtigung der Festigkeit der sehr steifen Abtriebswelle durch z. B. Schweißverbindungen zu vermeiden, schlägt die Erfindung in bevorzugter Weiterbildung vor, dass der Mitnehmer kraftschlüssig mittels eines Spannelementes an der Abtriebswelle befestigt ist. Ein solches Spannelement kann beispielsweise als Ringspannelement ausgebildet sein.

Um schließlich die auf die Abtriebswelle aufgeschobene Seilspule mit Hilfe des Mitnehmers drehfest (aber lösbar) mit der Welle koppeln zu können, kann der Mitnehmer ein oder mehrere exzentrisch angeordnete, z. B. exzentrisch um die Welle verteilte Zapfen aufinreisen, welche in exzentrisch angeordnete Ausnehmungen der Seilspulen eingreifen. Es besteht jedoch umgekehrt auch die Möglichkeit, dass der Mitnehmer Ausnehmungen und die Seilspule Zapfen aufweist. Jedenfalls erfolgt eine formschlüssige Ankopplung der Seilspule an dem Mitnehmer, wobei der Mitnehmer wiederum drehfest mit der Welle verbunden ist. Diese Konstruktion mit Hilfe eines Mitnehmers ermöglicht insbesondere auch das einfache Auswechseln der Seilspulen.

Die Ausgestaltung mit einem Mitnehmer bietet sich insbesondere bei solchen Ausführungsformen an, bei denen die Welle einen runden Querschnitt aufweist, so dass mit herkömmlichen Seilspulen gearbeitet werden kann. Es liegt jedoch alternativ auch im Rahmen der Erfindung, bei einer profilierten Welle mit einem von der Kreisform abweichenden Querschnitt gleichsam zusätzlich einen Mitnehmer für die Drehmomentübertragung vorzusehen.

Es liegt im Rahmen der Erfindung, dass zum Sichern der Seilspule auf der Welle endseitig ein Sicherungselement, z. B. eine Sicherungsscheibe auf die Welle aufgesetzt wird, nachdem die Seilspule auf die Welle aufgesteckt wurde.

Ein solches Sicherungselement, z. B. eine Sicherungsscheibe, kann mit einem Stift oder einer Feder gesichert werden. Optional oder ergänzend liegt es im Rahmen der Erfindung, dass die Zapfen und/oder die Ausnehmungen konisch ausgebildet sind und einen sich mit zunehmender Tiefe aufweitenden Querschnitt aufweisen. Eine solche konische Ausgestaltung hat den Vorteil, dass während des Betriebes aufgrund der Kraftumlenkung die Seilspule gleichsam von selbst in Richtung zu dem Mitnehmer gezogen und damit arretiert wird. Dann kann gegebenenfalls auf weitere Sicherungselemente, z. B. Sicherungsscheiben, verzichtet werden. Der Austausch der Seilspule wird durch diese Maßnahmen weiter vereinfacht, da auf das Lösen von Sicherungsscheiben oder dergleichen verzichtet werden kann.

Eine Seilabwickelstation, die auch als Spulengatter bezeichnet wird, ist mit einem Seilabwickelgestell und mehreren an dem Seilabwickelgestell angeordneten Seilabwickeleinheiten der beschriebenen Art ausgerüstet. Dabei können eine Vielzahl von Seilabwickeleinheiten in das Seilabwickelgestell integriert sein, z. B. mehr als 100 Seilabwickeleinheiten, vorzugsweise mehr als 200 Seilabwickeleinheiten, gegebenenfalls mehr als 300 Seilabwickeleinheiten. Die durch die Vereinfachung der Seilabwickeleinheiten beschriebenen Vorteile ergeben sich insbesondere dann, wenn in einer Anlage besonders viele Seilabwickeleinheiten integriert werden, die jeweils ein eigenes Antriebsaggregat aufweisen. Denn dann lässt sich in besonders wirtschaftlicher Weise ein speziell auf die Erfordernisse abgestimmtes Getriebe mit geeigneter Abtriebswelle herstellen und zur Verfügung stellen. Eine solche Seilabwickelstation lässt sich im Rahmen der Erfindung einfach und kostengünstig aufbauen, da sie nur aus wenigen Komponenten besteht. Sie setzt sich im Wesentlichen aus einer verhältnismäßig einfachen Stahlbaukonstruktion sowie den erfindungsgemäßen Motor-/Getriebeaggregaten und die entsprechenden Spulen zusammen.

Im Folgenden soll die Erfindung anhand von lediglich Ausführungsbeispiele darstellenden Zeichnungen näher erläutert werden. Es zeigen
- Fig. 1: schematisch eine Anlage zum Herstellen von Fördergurten mit Stahlseileinlage in einer Seitenansicht
- Fig. 2: einen vergrößerten Ausschnitt aus der Anlage nach Fig. 1 im Bereich einer Spannungsmessvorrichtung
- Fig. 3: den Gegenstand nach Fig. 2 in einer anderen Ansicht,
- Fig. 4: einen vergrößerten Ausschnitt aus dem Gegenstand nach Fig. 1 im Bereich einer Ausrichteinrichtung,
- Fig. 5: den Gegenstand nach Fig. 4 in einer anderen Ansicht,
- Fig. 6: einen anderen vergrößerten Ausschnitt aus dem Gegenstand nach Fig. 1,
- Fig. 7: den Gegenstand nach Fig. 6 in einer Draufsicht,
- Fig. 8: eine abgewandelte Ausführungsform der Anlage nach Fig. 1,
- Fig. 9: eine weitere Ausführungsform der Anlage nach Fig. 1,
- Fig. 10: einen vergrößerten Ausschnitt aus der Anlage nach Fig. 9,
- Fig. 11: eine Seilabwickeleinheit der Anlage nach Fig. 1,
- Fig. 12: eine abgewandelte Ausführungsform des Gegenstandes nach Fig. 11 und
- Fig. 13: den Gegenstand nach Fig. 12 in einem Querschnitt.

In den Figuren ist eine Anlage zum Herstellen von Fördergurten 1 mit Seileinlage, insbesondere Stahlseileinlage dargestellt. Derartige Fördergurte 1 werden in der Regel aus zumindest zwei Rohgummibahnen 2 hergestellt, zwischen denen ein Seilteppich bzw. Stahlseilteppich aus mehreren in Gurtlängsrichtung parallel zueinander in einer Ebene verlaufenden Seilen bzw. Stahlseilen 3 eingebettet wird. Die einzelnen Stahlseile 3 werden dabei mit einer vorgegebenen Zugkraft vorgespannt. Sie stehen folglich unter einem vordefinierten Bandzug. Die einzelnen, in einer Ebene verlaufenden Stahlseile 3 bilden gemeinsam einen Seilteppich 3'.

Die Anlage weist in ihrem grundsätzlichen Aufbau eine Seilabwickelvorrichtung 5, eine Zusammenführvorrichtung 6, eine Vulkanisierpresse 7 und zumindest eine Aufwickelvorrichtung 8 auf.

Die Seilabwickelvorrichtung 5 weist eine Vielzahl von drehbar gelagerten Seilspulen 9 auf, von denen die in den Fördergurt 1 einzubettenden Seile 3 abgewickelt werden.

In der Zusammenführvorrichtung 6 werden die unter Zugspannung stehenden und in Gurtlängsrichtung parallel zueinander in einer Ebene verlaufenden Stahlseile 3 bzw. der Stahlseilteppich 3' mit den Rohgummibahnen 2 zu einem Rohgurt 4 zusammengeführt.

Anschließend wird der Rohgurt 4 in der Vulkanisierpresse 7 mittels Druck und Wärme unter Bildung des Fördergurtes 1 vulkanisiert.

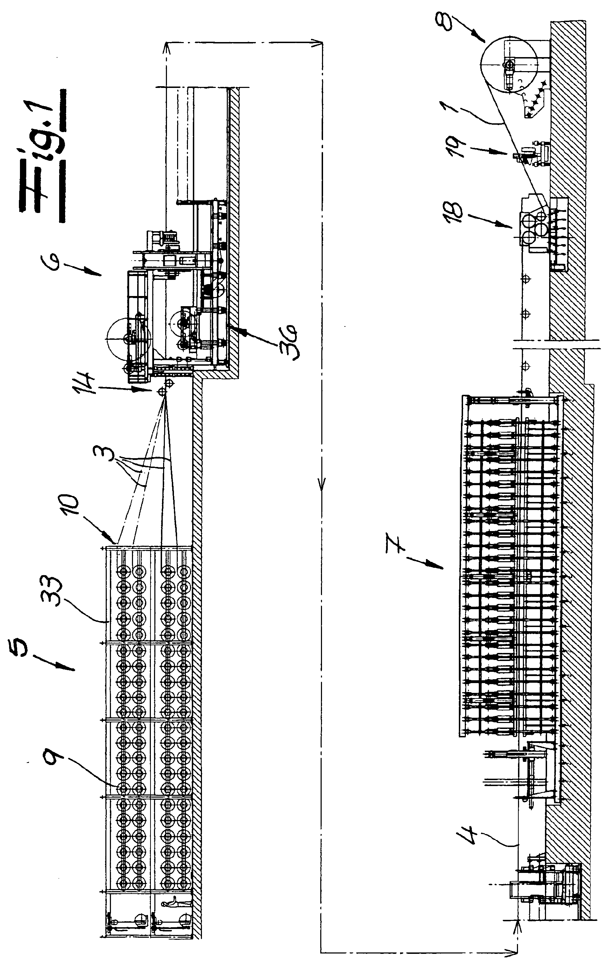

Die in Fig. 1 dargestellte Anlage arbeitet taktweise, d. h. sowohl die Zusammenführvorrichtung 6 als auch die Vulkanisiervorrichtung 7 arbeiten im Taktbetrieb. Dieses wird im Folgenden noch näher erläutert.

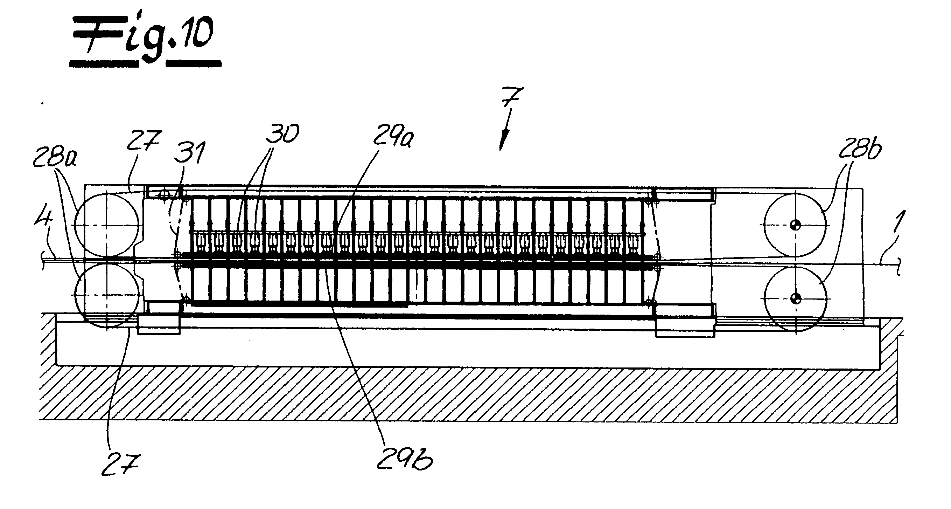

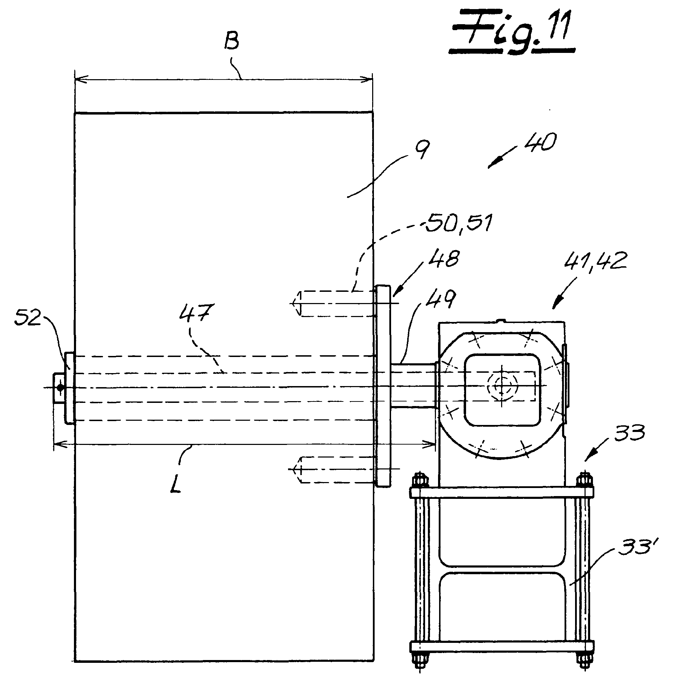

Während beim Stand der Technik bislang zwischen der Seilabwickelvorrichtung 5 und der Zusammenführvorrichtung 6, die auch als Belegestation bezeichnet wird, eine Spannvorrichtung vorgesehen war, ist die Seilabwickelvorrichtung nun im Rahmen der Erfindung als kombinierte Seilabwickel- und Spannvorrichtung 5 ausgebildet. In dieser Seilabwickel- und Spannvorrichtung 5 wird jedes Seil 3 einzeln auf die erforderliche Produktionsspannung gespannt. Dazu sind die einzelnen Seilspulen 9 jeweils mit einem separaten (in den Figuren 1 bis 10 nicht dargestellten) Spannantrieb ausgerüstet, welcher nun jedoch nicht nur dazu dient, einen Durchhang des Seils beim Abwickeln zu vermeiden, sondern mit diesen Spannantrieben lässt sich das zur Erzeugung der erforderlichen Produktionsspannung des Seils erforderliche Spannmoment einstellen. Diese Spannantriebe können als elektrische Synchronmotoren ausgebildet sein, die jeweils mit einem Frequenzumrichter ausgerüstet oder verbunden sind. Einzelheiten werden später im Zusammenhang mit den Fig. 11 bis 13 erläutert.

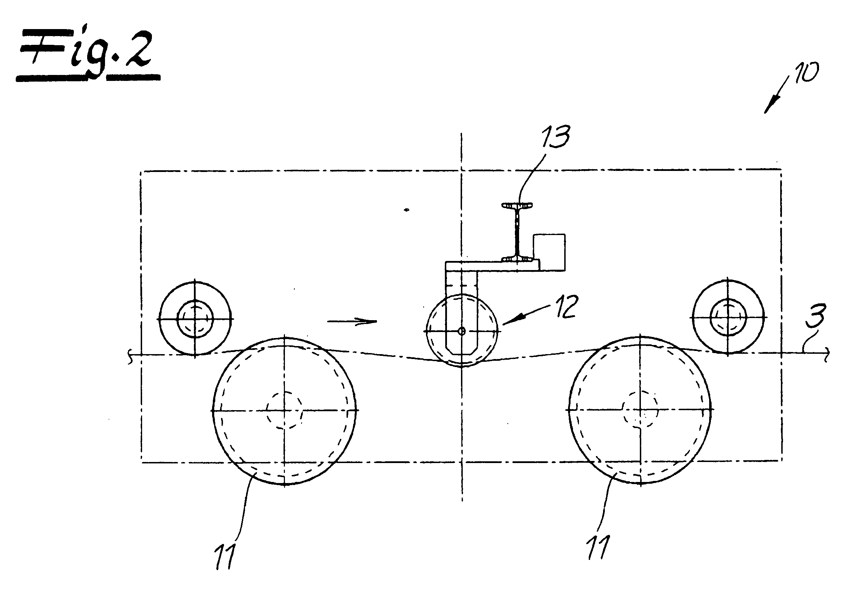

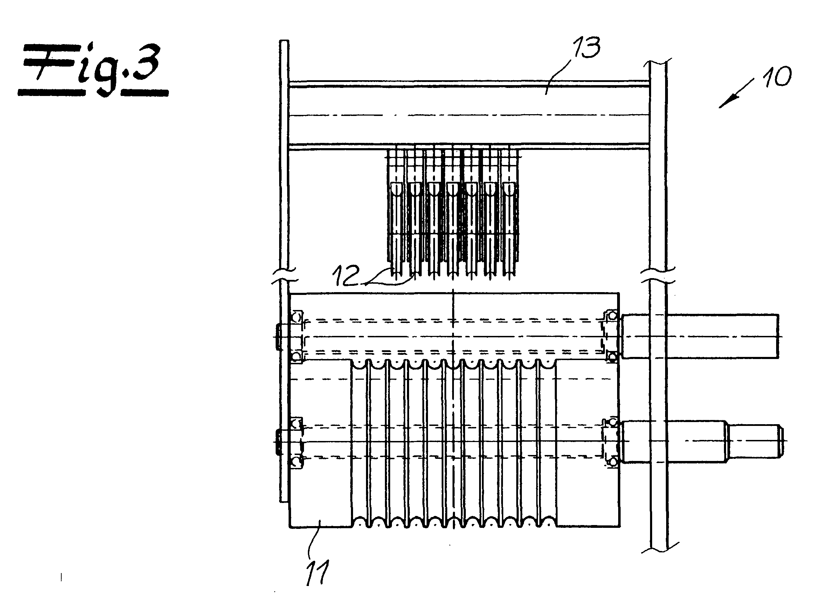

Um die gewünschten Seilspannungen der Einzelseile nicht nur einstellen sondern auch überwachen zu können, ist die Seilabwickel- und Spannvorrichtung mit einer oder mehreren Seilzugmessvorrichtungen 10 zur Messung sämtlicher Einzelseilspannungen ausgerüstet. Dazu weist die Seilzugmessvorrichtung 10 jeweils eine oder mehrere Messstellen 12 auf, wobei jedem Seil 3 eine (eigene) Messstelle 12 zugeordnet ist. Folglich lassen sich sämtliche Zugspannungen der einzelnen Seile einzeln messen und auswerten. In Fig. 1 ist diese Messvorrichtung 10 lediglich angedeutet. Aufbau und Funktionsweise dieser Messvorrichtung 10 sollen anhand der Fig. 2 und 3 erläutert werden.

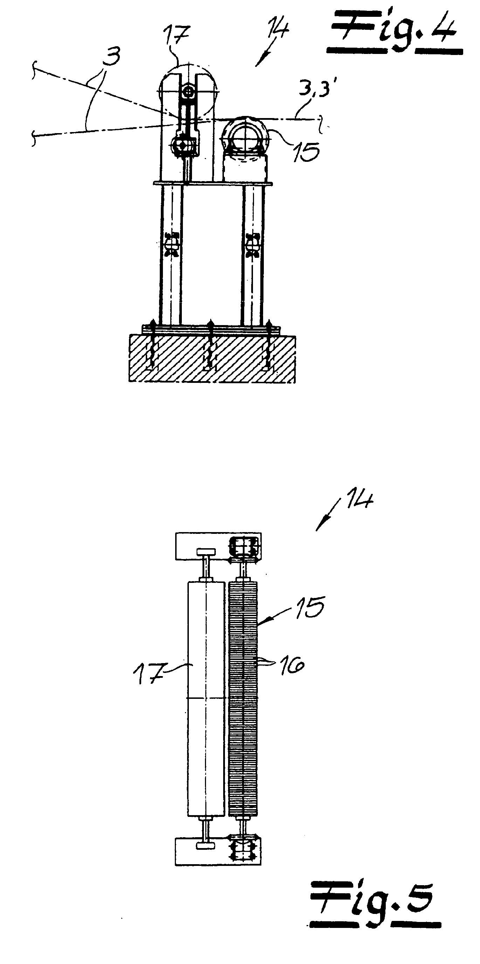

Die Seilabwickel- und Spannvorrichtung 5 weist ein Gestell 33 auf, in dem die Spulen 9 drehbar gelagert sind. Da - wie in Fig. 1 erkennbar - die einzelnen Spulen 9 in mehreren Etagen vorgesehen sind und im Übrigen auch nebeneinander eine Vielzahl von Spulen angeordnet sind, werden zunächst jeweils mehrere Einzelseile 3 in mehreren Gruppen aus der Seilabwickelstation abgeführt. Jeder dieser Gruppen kann eine eigene Seilzugmessvorrichtung 10 zugeordnet sein. Eine solche Seilzugmessvorrichtung 10 ist beispielhaft in den Fig. 2 und 3 dargestellt. Die Seilzugmessvorrichtungen 10 weisen jeweils mehrere Messstellen 12 auf, die Art eines Seildreiecks aufgebaut sind. Sie weisen zwei in Transportrichtung hintereinander angeordnete Führungsrollen 11 auf, zwischen denen jeweils mehrere, den einzelnen Seilen 3 zugeordnete Messtaster 12 als Messstellen angeordnet sind. Die Geometrie dieses Seildreiecks ist dabei so ausgestaltet, dass die Messtaster 12 zwischen den Führungsrollen 11 um ein vorgegebenes Maß eintauchen und folglich auf die Seile drücken. Jedem Messtaster 11 ist eine separate (nicht dargestellte) Kraftmessdose zugeordnet, mit der die von dem jeweiligen Seil 3 erzeugten Rückstellkräfte messbar sind. Die in den Fig. 2 und 3 dargestellten Führungsrollen 11 sind ortsfest in die Anlage integriert und folglich ortsfest in das Seilabwickelgestell integriert bzw. an dieses angeschlossen. Die einzelnen Messtaster 12 sind als drehbare Messscheiben 12 ausgebildet, welche unter Zwischenschaltung der Kraftmessdosen an einem gemeinsamen, ebenfalls ortsfesten Träger 13 aufgehängt sind. Ortsfest meint hier, während der Messung ortsfest. Es ist folglich auch möglich, die Messtaster bzw. den Träger verstellbar anzuordnen, z. B. zu Justagezwecken. Während der eigentlichen Messung wird der Träger dann jedoch fixiert. Die Geometrie der Führungsrollen 11 einerseits und des Trägers 13 andererseits mit den daran angeschlossenen Messscheiben 12 definiert folglich die dargestellte Seillaufgeometrie, welche eine quer zu Bandlaufrichtung drückende Kraft erzeugt. Die auf diese Weise erzeugten Rückstellkräfte werden nun mithilfe der Messtaster 12 bzw. deren Messdosen gemessen. Die auf diese Weise erzeugten Messwerte werden zur Regelung der Seilspannung verwendet, und zwar mithilfe der bereits erwähnten (nicht dargestellten) Steuer- bzw. Regelvorrichtung. Damit besteht die Möglichkeit, sämtliche Seilspannungen in der gewünschten Weise exakt einzustellen und zu regeln, so dass sich Fördergurte mit hoher Qualität erzeugen lassen. Da die Breite der Seilabwickel- und Spannvorrichtung 5 in der Praxis anders, z. B. größer als die Breite der herzustellenden Fördergurte 1 und folglich auch größer als die Breite des erforderlichen Seilteppichs 3' ist, ist zwischen der Seilabwickel- und Spannvorrichtung 5 und der Zusammenführvorrichtung 6 bzw. Belegevorrichtung eine Ausrichtvorrichtung 14 angeordnet, welche einen den Produktionsabstand oder in etwa den Produktionsabstand der Seile definierenden Spreizkamm 15 aufweist. Aufbau und Funktionsweise eines solchen Spreizkamms 15 ergeben sich aus einer vergleichenden Betrachtung der Fig. 4, 5, 6 und 7.

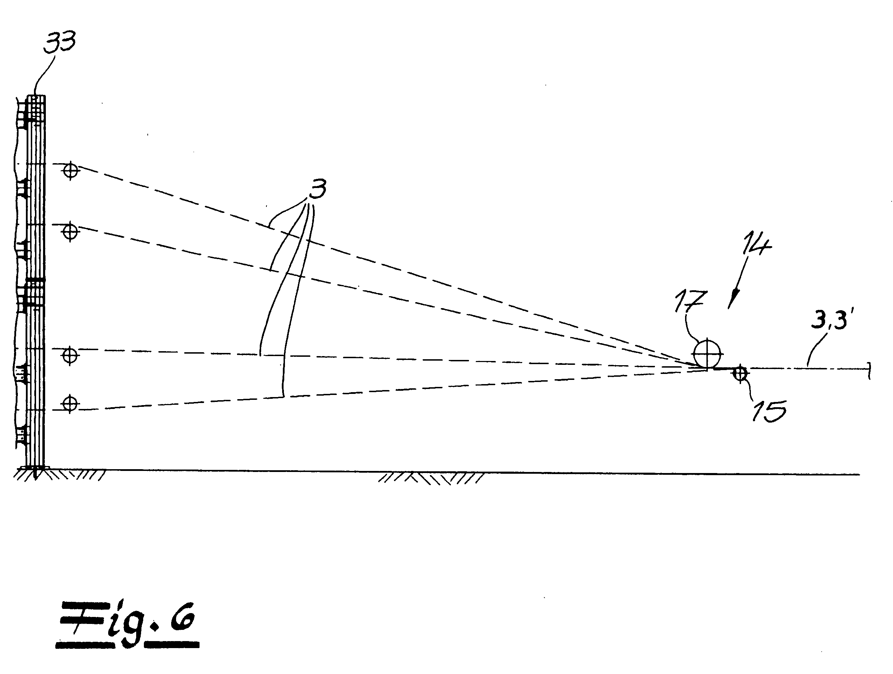

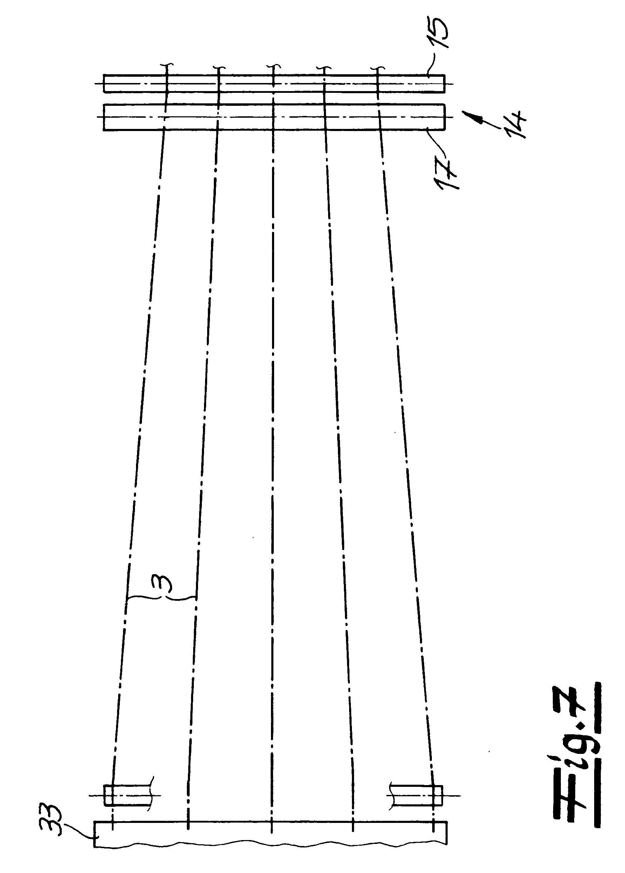

Der Spreizkamm 15 ist im Ausführungsbeispiel als drehbar gelagerter Rollenkamm 15 ausgebildet, welcher über den Außenumfang parallel zueinander umlaufende Führungsrillen 16 aufweist, die einen (in etwa) dem Produktionsabstand entsprechenden Rillenabstand aufweisen. Dem Rollenkamm 15 ist eine Führungsrolle 17 vorgeordnet, welche für eine einwandfreie Zuführung der aus unterschiedlichen Ebenen aus der Seilabwickelstation 5 anlaufenden Seile sorgt. Insbesondere die Fig. 6 und 7 zeigen, dass mithilfe dieses Spreizkamms 15 eine Verengung des Seilteppichs erfolgt. Der Rollenkamm kann sich aus einem drehbaren Rollenkern und einer darauf aufgeschobenen Hülse mit den Rillen zusammensetzen. So kann durch Austausch der Hülse eine Anpassung an verschiedene Seilabstände erfolgen. Einzelheiten sind nicht dargestellt. Alternativ zu einem solchen Rollenkamm 15 kann auch ein herkömmlicher fester Kamm mit Stahlzinken eingesetzt werden.

Unabhängig von dem Typ des Spreizkamms 15 erfolgt stets eine unterschiedlich starke Umlenkung der Einzelseile in der Gurtebene. Diese unterschiedlich starke Umlenkung ist - insbesondere bei einer Ausführungsform mit festem Kamm mit Stahlzinken - mit Veränderungen des Bandzuges verbunden. Der Spreizkamm 15 kann folglich die Zugspannungsverteilung der Stahlseile über die Gurtbreite inhomogen verändern und folglich verfälschen. Dieser Effekt wird im Rahmen der Erfindung kompensiert, indem die - z. B. empirisch ermittelten Veränderungen der Zugspannungen im Bereich des Spreizkamms 15 - bei der Einstellung des Spannungsprofils im Bereich der Seilspannstation 5 vorab berücksichtigt werden. Soll beispielsweise ein Seilteppich mit konstanter Seilspannung über die gesamte Gurtbreite erzeugt werden, so wird unter Berücksichtigung der inhomogenen Veränderungen im Bereich des Spreizkamms 15 vorab im Bereich der Seilspannstation 5 ein inhomogenes Spannungsprofil erzeugt. In die Regelung fließt folglich das Verhalten der Stahlseile im Bereich des Spreizkamms mit ein.

Im Übrigen ist in Fig. 1 erkennbar, dass der Vulkanisierpresse 7 eine Durchzugsvorrichtung 18 nachgeordnet ist, welche die Stahlseile 3 und den fertigen Fördergurt 1 durch die gesamte Anlage zieht, bevor der fertige Fördergurt 1 dann auf dem nachgeordneten Fertiggurt-Aufwickler 8 aufgewickelt wird. Zwischen Durchzugsvorrichtung 18 und Fertiggurt-Aufwickler 8 kann eine Trennvorrichtung 19 vorgesehen sein.

Die in Fig. 1 dargestellte Anlage arbeitet - wie bereits erläutert - taktweise. Wurde beispielsweise in der Vulkanisierpresse 7 ein Fördergurtabschnitt fertiggestellt, so wird die Vulkanisierpresse 7 geöffnet und der Fertiggurt 1 mit der Durchzugsvorrichtung 18 um die Länge des zuletzt vulkanisierten Fördergurtabschnittes vortransportiert. Zugleich wird damit der nächste zu vulkanisierende Abschnitt des Rohgurtes in die Vulkanisierpresse 7 eingezogen. Die Zusammenführvorrichtung 6 ist als taktweise arbeitende Belegevorrichtung mit einem Konfektionierwagen 36 ausgebildet. Im Zuge des Vortransportierens des fertigen Gurtabschnittes wurden auch die noch nicht konfektionierten Stahlseile um die entsprechende Länge vorgezogen. Bevor dieser Stahlseilteppich nun mit den Rohgummibahnen 2 mithilfe des Konfektionierwagens 19 belegt wird, muss die gewünschte Produktionsspannung auf die Stahlseile aufgebracht werden. Dazu wird nun bei weiterhin geöffneter Presse 7 und bei "fixierter" Durchzugsvorrichtung 18 mithilfe der Seilabwickel- und Spannstation 5 in der beschriebenen Weise der gewünschte Bandzug auf die einzelnen Stahlseile 3 aufgebracht und auf die gewünschten Sollwerte geregelt. Dieses gelingt im Rahmen der Erfindung folglich ohne separate Spannstation. Nach Einstellung der gewünschten Seilspannungen wird der Seilteppich mithilfe des Konfektionierwagens 19 mit den Rohgummibahnen 2 belegt und abschnittsweise vorgepresst. Dabei oder danach wird die Vulkanisierheizpresse 7 geschlossen und dort der zuvor hineintransportierte Rohgurtabschnitt vulkanisiert. Jedenfalls arbeitet diese Belegevorrichtung 6 taktweise, d. h. die Seile werden in ruhendem Zustand mit dem Rohgummi belegt, indem die Rohgurtabwickler mit dem Wagen 36 hin- und hergefahren werden.

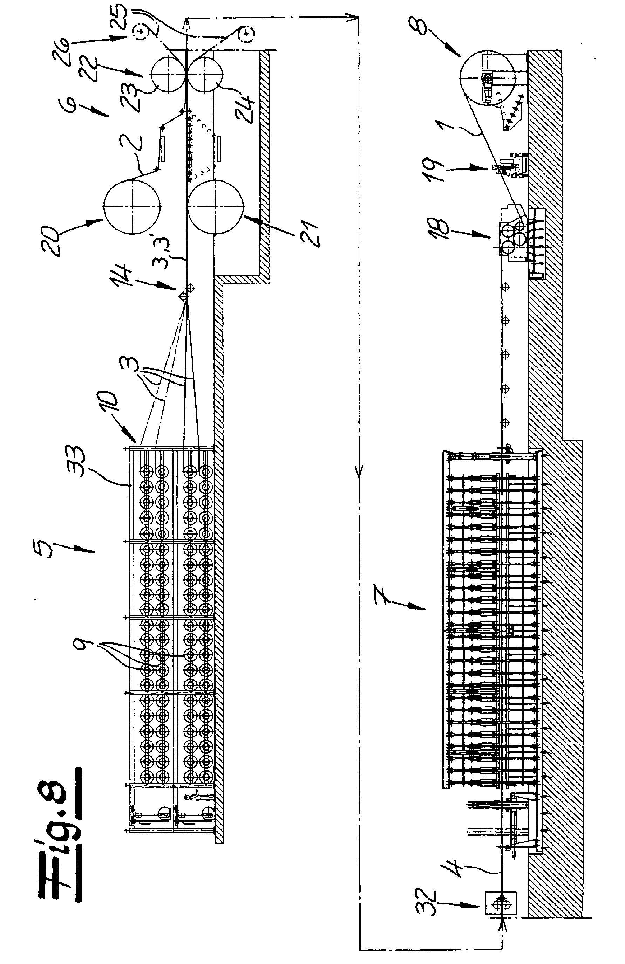

Fig. 8 zeigt demgegenüber eine abgewandelte Ausführungsform, bei der zwar die Vulkanisierpresse 7 weiterhin als Taktpresse ausgebildet ist, die Zusammenführstation 6 arbeitet jedoch kontinuierlich. Das bedeutet, dass in der Zusammenführstation die Rohgummibahnen 2 während des Transportes der Stahlseile 3 mit den sich bewegenden Stahlseilen 3 zusammengeführt werden. Dazu weist die Zuführvorrichtung 6 eine oberhalb der Stahlseile 3 angeordnete, ortsfeste Abwickelvorrichtung 20 für die obere Rohgummibahn 2 und eine unterhalb der Stahlseile 3 angeordnete, ortsfeste Abwickelvorrichtung 21 für die untere Rohgummibahn 2 auf. Diesen Abwickelvorrichtungen 20, 21 nachgeordnet ist zumindest eine Andrückvorrichtung 22, mit welcher die Stahlseile 3 an bzw. in die Rohgummibahnen 2 gegeneinander gedrückt werden. Im Ausführungsbeispiel ist die Andrückvorrichtung 22 als kalanderartige Walzenvorrichtung mit Oberwalze 23 und Unterwalze 24 ausgebildet. Da die Rohgummibahnen 2 in der Regel mit einer Trennfolie 25 belegt und aufgewickelt sind, ist die Zusammenführeinrichtung 6 im Ausführungsbeispiel mit Aufwickeleinrichtungen 26 für diese Trennfolie 25 ausgerüstet. Diese Aufwickeleinrichtungen 26 sind lediglich angedeutet. Sie sind in Transportrichtung hinter der Andrückvorrichtung 22 angeordnet. Im Übrigen arbeitet die Anlage gemäß Fig. 8 so wie die Anlage gemäß Fig. 1. Zwischen Belegevorrichtung 6 und Presse 7 kann eine Besäumvorrichtung 32 angeordnet sein.

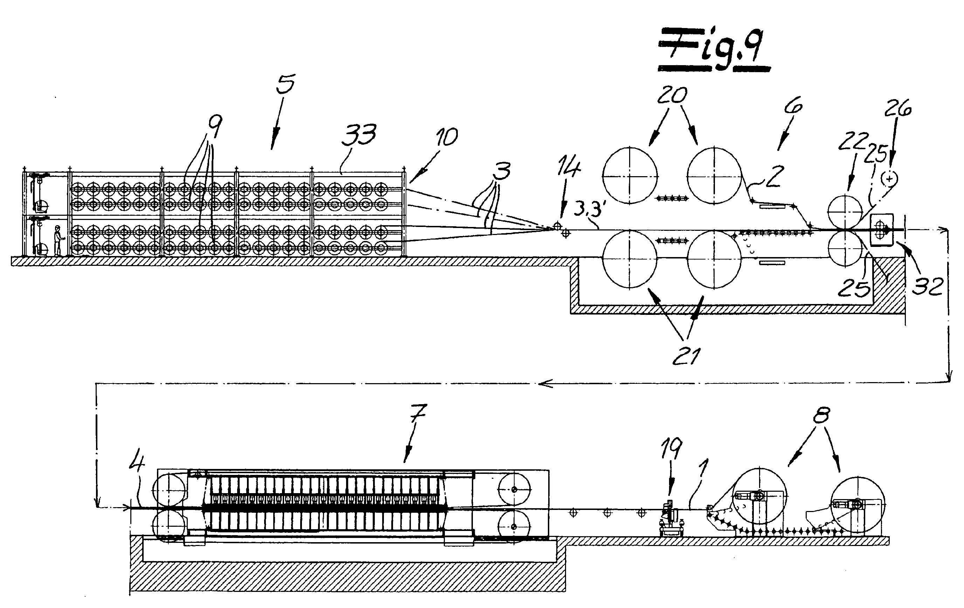

In der abgewandelten Ausführungsform nach Fig. 9 ist nun auch die Vulkanisierpresse 7 als kontinuierlich arbeitende Presse ausgebildet. Es handelt sich im Ausführungsbeispiel um eine Doppelbandpresse mit im Pressenoberteil und im Pressenunterteil endlos umlaufenden Pressbändern 27, welche z. B. als Stahlbänder ausgeführt sind und über Umlenkwalzen 28a, 28b geführt sind. Ferner sind im Pressenoberteil und im Pressenunterteil jeweils beheizbare Pressenplatten 29a, 29b angeordnet, wobei die obere Pressenplatte 29a und/oder die untere Pressenplatte 29b mit hydraulischen Zylinderkolbenanordnungen 30 beaufschlagt ist. Im Ausführungsbeispiel handelt es sich um eine Oberkolbenpresse. Die umlaufenden Pressbänder 27 sind unter Zwischenschaltung von Wälzkörperaggregaten 31, z. B. Rollstangen an den Pressenplatten 29a, 29b abgestützt. Bei dem in Fig. 9 dargestellten Ausführungsbeispiel wird nun auf eine separate Durchzugsvorrichtung hinter der Presse verzichtet. Die kontinuierliche Presse ist folglich so ausgelegt, dass mit den Pressbändern 27 die Stahlseile 3 mit der erforderlichen Zugkraft durch die Anlage hindurchgezogen werden können. Die Seilabwickel- und Spannvorrichtung 5 stellt die gewünschten Zugkräfte der Einzelseile 3 folglich gegen die ziehende kontinuierliche Presse 7 ein. Mithilfe der in Fig. 9 dargestellten Anlage ist folglich ein kontinuierlicher Betrieb möglich.

Die in den Figuren dargestellte Anlage wurde am Beispiel der Herstellung von Fördergurten mit Stahlseileinlage erläutert. Die Erläuterungen gelten jedoch gleichermaßen für Fördergurte mit anderen Seileinlagen.

Eine vorteilhafte Weiterbildung der Erfindung soll noch anhand der Fig. 11 bis 13 erläutert werden.

Wie bereits erläutert, weist die Seilabwickelstation 5 ein Seilabwickelgestell 33 und mehrere an dem Seilabwickelgestell 33 angeordnete Seilabwickeleinheiten 40 auf. Jede Seilabwickeleinheit 40 setzt sich im Wesentlichen aus einem Antriebsaggregat 41, 42 und einer Seilspule 9 zusammen, wobei von den einzelnen Seilspulen 9 der Seilabwickeleinheiten 40 die in den Fördergurt 1 einzubettenden Seile 3 abgewickelt werden. Die Seilspulen 9 sind lösbar und folglich auswechselbar mit den Antriebsaggregaten 41, 42 verbunden.

Das Antriebsaggregat 41, 42 weist zumindest einen Motor 41 und zumindest ein Getriebe 42 auf. Das Getriebe ist mit einer Abtriebswelle 47 ausgerüstet. Mit Hilfe des Antriebsaggregates 41, 42 ist die Seilspule 9 antreibbar. Dabei ist zu berücksichtigen, dass die Seile beispielsweise von der in die Anlage integrierten Durchzugsvorrichtung 18 von den Seilspulen 9 abgezogen bzw. abgewickelt werden, so dass das Antriebsaggregat 41, 42 im Rahmen der Erfindung als Brems- und/oder Spannaggregat ausgebildet ist, welches die abzuwickelnden Seile 3 unter einer vorgegebenen Zugspannung hält. Wie beschrieben erfolgt über die Brems- und/oder Spannaggregate die Erzeugung der erforderlichen Produktionsspannung der Seile. Mit den Aggregaten 41, 42 lassen sich folglich die zur Erzeugung dieser erforderlichen Produktionsspannung des Seils erforderlichen Spannmomente einstellen. Die Spannmotoren 41 sind dabei z. B. als elektrische Synchronmotoren ausgebildet, die jeweils mit einem Frequenzumrichter ausgerüstet oder verbunden sein können.

Erfindungsgemäß ist die Seilspule 9 einer Seilabwickeleinrichtung 40 nun - wie in Fig. 11 bis 13 dargestellt - unmittelbar auf die in das Getriebe 42 integrierte und aus dem Getriebe vorkragende Abtriebswelle 47 aufgesteckt.

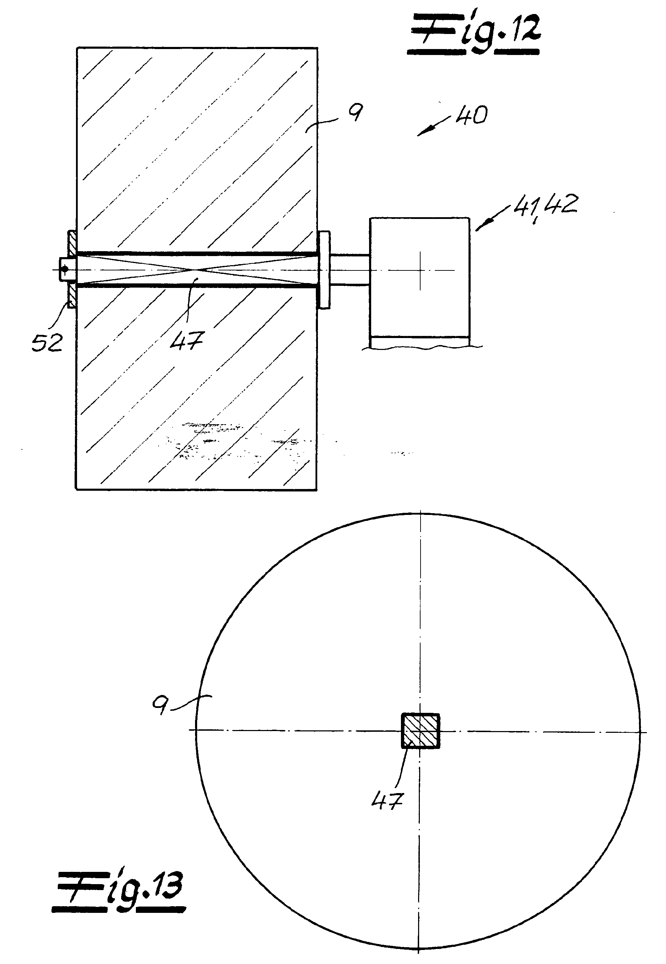

Fig. 11 zeigt dabei beispielhaft einen entlang der Arbeitsrichtung verlaufenden Längsträger 33' des Seilabwickelgestells 33. Auf diesem Längsträger 33' ist das Antriebsaggregat 41, 42 aufgesetzt, welches sich im Wesentlichen aus Motor 41 und Getriebe 42 zusammensetzt, wobei der Motor 41 selbst in der Fig. 11 bzw. 12 nicht im Detail dargestellt ist.

Die in das Getriebe 42 integrierte Abtriebswelle 47 ragt nun um eine vorgegebene Länge L aus dem Getriebe 42 hervor, wobei diese Länge L größer als die Breite B der Seilspule ist. Dieses ermöglicht es, dass sich die Seilspule 9 direkt auf die aus dem Getriebe vorkragende Abtriebswelle 47 aufstecken lässt, ohne dass eine separate Spulenwelle drehfest mit einer normierten Abtriebswelle des Getriebes verbunden werden müsste.

Bei dem Ausführungsbeispiel nach Fig. 11 ist die Abtriebswelle 47 als unprofilierte Glattwelle aus hochfestem Stahl mit einer glatten Oberfläche ausgebildet. Diese hat einen runden Querschnitt. Sie greift in eine Spulenausnehmung mit ebenfalls rundem Querschnitt ein. Um die Seilspule 9 drehfest mit der Abtriebswelle 47 verbinden zu können und dennoch einen einfachen Austausch der Seilspule zu ermöglichen, ist ein Mitnehmer 48 vorgesehen, welcher einerseits drehfest an der Abtriebswelle 47 befestigt ist und andererseits eine drehfeste - aber lösbare - Verbindung mit der Seilspule 9 ermöglicht. Der Mitnehmer 48 ist dabei kraftschlüssig mit der Abtriebswelle 47 verbunden, z. B. über ein Spannelement 49. Dieses Spannelement 49 ist in Fig. 11 lediglich vereinfacht dargestellt. Es kann sich beispielsweise um ein Ringspannelement 49 handeln.

Um nun die einzelnen Seilspulen 9 auswechselbar drehfest mit der Abtriebswelle 47 verbinden zu können, weist der Mitnehmer 48 im Ausführungsbeispiel mehrere exzentrisch angeordnete Zapfen 50 auf, welche in ebenfalls exzentrisch angeordnete, korrespondierende Ausnehmungen 51 der Seilspule eingreifen. Auf diese Weise lassen sich hohe Zugkräfte bzw. Drehmomente übertragen. Dennoch ist eine einfache Auswechselbarkeit der Seilspule 9 gewährleistet. Durch die kraftschlüssige Spannverbindung zwischen Mitnehmer 48 und Abtriebswelle 47 werden Schweißverbindungen vermieden, die die Festigkeit der Abtriebswelle 47 beeinträchtigen könnten. Die formschlüssige Verbindung zwischen Seilspule 9 und Mitnehmer 48 ermöglicht ein einfaches Auswechseln der Seilspule.

Es liegt grundsätzlich im Rahmen der Erfindung, dass die Seilspule 9 in axialer Richtung mit einem Sicherungselement 52, z. B. einer Sicherungsscheibe gesichert wird. Optional oder auch ergänzend können jedoch auch der Zapfen 50 und/oder die Ausnehmung 51 konisch ausgebildet sein und einen sich mit zunehmender Tiefe aufweitenden Querschnitt aufweisen. Eine solche Ausgestaltung ist in den Figuren nicht dargestellt. Sie ermöglicht es, gegebenenfalls auf das Sicherungselement zu verzichten. Denn durch die konische Ausgestaltung von Zapfen und/oder Ausnehmung werden während des Betriebes die Zugkräfte so umgelenkt, dass die Seilspule gleichsam von selbst an den Mitnehmer gezogen wird.

Insgesamt zeichnet sich die erfindungsgemäße Seilabwickeleinheit 45 durch einen einfachen und sehr kompakten Aufbau aus, da nicht länger eine normierte Abtriebswelle eines Standardgetriebes mit einer herkömmlichen Spulenwelle verbunden werden muss.

Diese Vorteile werden auch bei der in den Fig. 12 und 13 dargestellten abgewandelten Ausführungsform der Erfindung erreicht. Bei dieser Ausführungsform ist die Abtriebswelle 47 als profilierte Welle mit einem von der Kreisform abweichenden Querschnitt, nämlich einem mehreckigen Querschnitt ausgebildet. Im Ausführungsbeispiel weist die Abtriebswelle 47 einen viereckigen Querschnitt, z. B. quadratischen Querschnitt auf. Diese profilierte Abtriebswelle 47 greift in eine korrespondierende Spulenausnehmung der Seilspule 9 ein, d. h., diese Spulenausnehmung weist ebenfalls einen von der Kreisform abweichenden Querschnitt, z. B. mehreckigen Querschnitt auf. Auch dieser Querschnitt ist im Ausführungsbeispiel viereckig, nämlich quadratisch ausgebildet. Auf diese Weise greift die Abtriebswelle 47 zur Drehmomentübertragung drehfest und formschlüssig in die Spulenausnehmung ein. Damit wird es möglich, auf die Anordnung mit einem Mitnehmer, wie sie beispielsweise in Fig. 11 dargestellt ist, zu verzichten, da die Drehmomentübertragung unmittelbar über die Abtriebswelle 47 realisiert werden kann. Auch bei dieser Ausführungsform ist es zweckmäßig, die Seilspule 9 in axialer Richtung mit einem Sicherungselement 52, z. B. mit einer Sicherungsscheibe zu sichern.

## Patentansprüche

1. Anlage zum Herstellen von Fördergurten (1) mit Seileinlage, z. B. Stahlseileinlage, mit zumindest
- einer Seilabwickelvorrichtung (5) mit mehreren Seilspulen (9), von denen die in den Fördergurt (1) einzubettenden Seile, z. B. Stahlseile (3) abgewickelt werden,
- einer Zusammenführvorrichtung (6), in welcher die unter Zugspannung stehenden und in Gurtlängsrichtung parallel zueinander in einer Ebene verlaufenden Seile (3) mit einer oder mehreren Rohgummibahnen (2) zu einem Rohgurt (4) zusammengeführt werden,
- einer Vulkanisierpresse (7), in welcher der Rohgurt (4) mittels Druck und/oder Wärme unter Bildung des Fördergurtes (1) vulkanisiert,
**dadurch gekennzeichnet, dass** die Seilabwickelvorrichtung als Seilabwickel- und Spannvorrichtung (5) ausgebildet ist, in welcher jedes Seil (3) einzeln auf die erforderliche Produktionsspannung gespannt wird,
wobei die einzelnen Seilspulen (9) jeweils mit zumindest einem elektromotorischen Spannantrieb oder Spann-Antriebsaggregat ausgerüstet bzw. verbunden sind, mit welchem zur Erzeugung der erforderlichen Produktionsspannung des Seils (3) das erforderliche Spannmoment einstellbar ist,
wobei die Seilabwickel- und Spannvorrichtung (5) mit einer oder mehreren Seilzugmessvorrichtungen (10) ausgerüstet ist, mit welchen die Zugspannung der einzelnen Seile (3) messbar ist, wobei jedem Seil (3) eine Messstelle (12) zugeordnet ist,
wobei die Seilabwickel- und Spannvorrichtung (5) mit einer Steuer- und/oder Regelvorrichtung ausgerüstet ist, welche mit einerseits der Seilzugmessvorrichtung (10) bzw. den Messstellen (12) und andererseits den Spannantrieben verbunden ist.

2. Anlage nach Anspruch 1, **dadurch gekennzeichnet, dass** die Spannantriebe als elektrische Synchronmotoren ausgebildet oder mit elektrischen Synchronmotoren ausgerüstet sind, die gemeinsam oder jeweils zumindest mit einem Frequenzumrichter ausgerüstet oder verbunden sind.

3. Anlage nach Anspruch 1 oder 2, mit einem Seilabwickelgestell (33), in welchem die Seilspulen (9) drehbar und über die Spannantriebe bzw. Antriebsaggregate angetrieben angeordnet sind, **dadurch gekennzeichnet, dass** die Seilzugmessvorrichtung (10) in das Seilabwickelgestell (33) integriert ist, z. B. am ausgangsseitigen Ende des Seilabwickelgestells (33) angeordnet ist.

4. Anlage nach einem der Ansprüche 1 bis 3, **dadurch gekennzeichnet, dass** die Messstellen (12) von den einzelnen Seilen jeweils zugeordneten Messtastern (12) gebildet werden.

5. Anlage nach Anspruch 4, **dadurch gekennzeichnet, dass** die Messtaster als Messscheiben (12) oder Messrollen ausgebildet sind, welche jeweils mit Kraftmessdosen verbunden oder ausgerüstet sind.

6. Anlage nach Anspruch 4 oder 5, **dadurch gekennzeichnet, dass** die Seilzugmessvorrichtung (10) nach Art eines Seildreiecks zumindest zwei in Transportrichtung hintereinander angeordnete Führungsrollen (11) aufweist, zwischen denen der Messtaster (12) auf die Seile drückend um ein vorgegebenes Maß eintaucht, wobei mit den Messtastern (12) die von dem jeweiligen Seil erzeugte Rückstellkraft messbar ist.

7. Anlage nach einem der Ansprüche 1 bis 6, mit einer der Vulkanisierpresse (7) nachgeordneten Durchzugsvorrichtung (18), **dadurch gekennzeichnet, dass** die Seile (3) mit der Seilabwickel- und Spannvorrichtung (5) zwischen der Seilabwickel- und Spannvorrichtung (5) und der Durchzugsvorrichtung (18) auf die Produktionsspannung spannbar sind.

8. Anlage nach einem der Ansprüche 1 bis 7, **dadurch gekennzeichnet, dass** zwischen der Seilabwickel- und Spannvorrichtung (5) und der Zusammenführvorrichtung (6) zumindest eine Ausrichtvorrichtung (14) mit zumindest einem dem Seilabstand verändernden Spreizkamm (15) angeordnet ist, in welchem die einzelnen Seile (3) in der Gurtebene um unterschiedliche Winkel umgelenkt werden.

9. Anlage nach einem der Ansprüche 1 bis 8, **dadurch gekennzeichnet, dass** ein Antriebsaggregat (41, 42) zumindest einen Motor (41) und zumindest ein Getriebe (42) mit einer Abtriebswelle (47) aufweist, wobei die Seilspule (9) unmittelbar auf die in das Getriebe (42) integrierte und aus dem Getriebe (42) vorkragende Abtriebswelle (47) aufgesteckt ist.

10. Anlage nach Anspruch 9, **dadurch gekennzeichnet, dass** die in das Getriebe (42) integrierte Abtriebswelle (47) um eine vorgegebene Länge (L) aus dem Getriebe (42) vorkragt, welche zumindest der Breite (B) der Seilspule (9) entspricht oder größer ist.

11. Anlage nach Anspruch 9 oder 10, **dadurch gekennzeichnet, dass** die Abtriebswelle (47) als profilierte Welle mit einem von der Kreisform abweichenden Querschnitt, z. B. mehreckigem Querschnitt, ausgebildet ist und zur Drehmomentübertragung drehfest und formschlüssig in eine korrespondierende Spulenausnehmung der Seilspule (9) eingreift.

12. Anlage nach Anspruch 9 oder 10, **dadurch gekennzeichnet, dass** die Abtriebswelle (47) als unprofilierte Glattwelle mit einem runden Querschnitt, z. B. aus hochfestem Stahl mit einer glatten Oberfläche ausgebildet ist.

13. Anlage nach einem der Ansprüche 9 bis 12, **dadurch gekennzeichnet, dass** die Seilspule (9) mit einem Mitnehmer (48) drehfest an der Abtriebswelle (47) befestigt oder befestigbar ist.

14. Anlage nach Anspruch 13, **dadurch gekennzeichnet, dass** der Mitnehmer (48) kraftschlüssig mittels eines Spannelementes (49), z. B. Ringspannelementes, an der Abtriebswelle (47) befestigt ist.

15. Anlage nach Anspruch 12 oder 14, **dadurch gekennzeichnet, dass** die Seilspule (9) formschlüssig und lösbar an dem Mitnehmer (48) befestigt ist.

16. Anlage nach Anspruch 15, **dadurch gekennzeichnet, dass** der Mitnehmer (48) ein oder mehrere exzentrisch angeordnete, z. B. exzentrisch um die Welle verteilte Zapfen (50) aufweist, welche sich z. B. in axialer Richtung erstrecken und in exzentrisch angeordnete Ausnehmungen (51) der Seilspule (9) eingreifen.

17. Anlage nach Anspruch 16, **dadurch gekennzeichnet, dass** die Zapfen (50) und/oder die Ausnehmung (51) konisch ausgebildet sind und einen sich mit zunehmender Tiefe aufweitenden Querschnitt aufweisen.

18. Anlage nach einem der Ansprüche 9 bis 17, **dadurch gekennzeichnet, dass** der Motor (41) als Elektromotor, z. B. elektrischer Synchronmotor, ausgebildet ist.

19. Anlage nach einem der Ansprüche 9 bis 18, **dadurch gekennzeichnet, dass** das Getriebe (42) als Untersetzungsgetriebe, z. B. Kegelradgetriebe, ausgebildet ist.

20. Verfahren zum Herstellen von Fördergurten mit Stahlseileinlage mit einer Anlage nach einem der Ansprüche 1 bis 19, **dadurch gekennzeichnet, dass** die Seilspannungen der einzelnen Seile gemessen und unter Berücksichtigung der Messergebnisse in der Seilabwickel- und Spannvorrichtung auf einen gewünschten Sollwert bzw. Sollwerte geregelt werden.

21. Verfahren nach Anspruch 20, wobei die Seile in einem zwischen der Seilabwickelvorrichtung und der Zuführvorrichtung angeordneten Spreizkamm unter Änderung der Seilspannung einzelner Seile in der Gurtebene unterschiedlich umgelenkt werden, **dadurch gekennzeichnet, dass** die Seilspannung in der Seilabwickel- und Spannvorrichtung mit der Maßgabe eingestellt oder geregelt wird, dass unter Berücksichtigung der Änderungen der Seilspannungen in dem Führungskamm hinter dem Führungskamm die gewünschten Produktionsspannungen gegeben sind.

## Claims

1. A system for manufacturing belts (1) of conveyors with a cable insert, e.g. a steel cable insert, comprising at least
- a cable unwinding device (5) with several cable coils (9), from which the cables to be embedded in the belt (1), e.g. steel cables (3), are unwound,
- a joining device (6), in which the cables (3) that are subjected to a tensile stress and extend parallel to one another in one plane in the longitudinal direction of the belt are combined with one or more raw rubber strips (2) so as to form a raw belt (4) and
- a vulcanizing press (7), in which the raw belt (4) is vulcanized by means of pressure and/or heat such that the belt (1) is formed,
**characterized in that** the cable unwinding device is realized in the form of a cable unwinding and tensioning device (5), in which each cable (3) is individually tensioned to the required production tension,
wherein the individual cable coils (9) are respectively equipped or connected to at least one electromotive tensioning drive or tensioning drive unit, by means of which the required tensioning moment for generating the required production tension of the cable (3) can be adjusted,
wherein the cable unwinding and tensioning device (5) is equipped with one or more cable tension measuring devices (10) for measuring the tensile stress of the individual cables (3), with a measuring point (12) being assigned to each cable (3), and
wherein the cable unwinding and tensioning device (5) is equipped with a control and/or regulating device that is respectively connected to the cable tension measuring device (10) with the measuring points (12) on the one hand and to the tensioning drives on the other hand.

2. The system according to claim 1, **characterized in that** the tensioning drives are realized in the form of electric synchronous motors or equipped with electric synchronous motors that are jointly or respectively equipped with or connected to at least one frequency converter.

3. The system according to claim 1 or 2 with a cable unwinding stand (33), in which the cable coils (9) are rotatably arranged and driven by means of the tensioning drives or drive units, **characterized in that** the cable tension measuring device (10) is integrated into the cable unwinding stand (33), e.g. at the output end of the cable unwinding stand (33).

4. The system according to one of claims 1-3, **characterized in that** the measuring points (12) are formed by measuring probes (12) that are respectively assigned to the individual cables.

5. The system according to claim 4, **characterized in that** the measuring probes are realized in the form of measuring discs (12) or measuring rollers that are respectively connected to or equipped with load cells.

6. The system according to claim 4 or 5, **characterized in that** the cable tension measuring device (10) features at least two guide rollers (11) that are arranged behind one another in the transport direction similar to a cable triangle, wherein the measuring probe (12) is inserted between said guide rollers by a predefined distance such that it presses against the cables and the restoring force generated by the respective cable can be measured with the measuring probes (12).

7. The system according to one of claims 1-6 with a pull-through device (18) arranged downstream of the vulcanizing press (7), **characterized in that** the cables (3) can be tensioned to the production tension between the cable unwinding and tensioning device (5) and the pull-through device (18) by means of the cable unwinding and tensioning device (5).

8. The system according to one of claims 1-7, **characterized in that** at least one aligning device (14) with at least one spreading comb (15) for varying the cable spacing is arranged between the cable unwinding and tensioning device (5) and the joining device (6), wherein the individual cables (3) are deflected by different angles in the plane of the belt in said aligning device.

9. The system according to one of claims 1-8, **characterized in that** a drive unit (41, 42) features at least one motor (41) and at least one gear (42) with an output shaft (47), wherein the cable coil (9) is directly attached to the output shaft (47) that is integrated into the gear (42) and protrudes from the gear (42).

10. The system according to claim 9, **characterized in that** the output shaft (47) integrated into the gear (42) protrudes from the gear (42) by a predefined length (L) that at least corresponds to or is greater than the width (B) of the cable coil (9).

11. The system according to claim 9 or 10, **characterized in that** the output shaft (47) is realized in the form of a profiled shaft with a non-circular cross section, e.g. a polygonal cross section, and engages into a corresponding coil recess of the cable coil (9) in a rotationally rigid and positive fashion in order to transmit a torque.

12. The system according to claim 9 or 10, **characterized in that** the output shaft (47) is realized in the form of a smooth, non-profiled shaft with a round cross section that consists, e.g., of high-strength steel and has a smooth surface.

13. The system according to one of claims 9-12, **characterized in that** the cable coil (9) is fastened or can be fastened on the output shaft (47) in a rotationally rigid fashion with a driver (48).

14. The system according to claim 13, **characterized in that** the driver (48) is non-positively fastened on the output shaft (47) by means of a tensioning element (49), e.g. an annular tensioning element.

15. The system according to claim 12 or 14, **characterized in that** the cable coil (9) is non-positively and detachably fastened on the driver (48).

16. The system according to claim 15, **characterized in that** the driver (48) features one or more eccentrically arranged pins (50), e.g. pins that are eccentrically distributed around the shaft, wherein said pins extend, e.g., in the axial direction and engage into eccentrically arranged recesses (51) of the cable coil (9).

17. The system according to claim 16, **characterized in that** the pins (50) and/or the recesses (51) are realized in a conical fashion and have a cross section that widens as the depth increases.

18. The system according to one of claims 9-17, **characterized in that** the motor (41) is realized in the form of an electric motor, e.g. an electric synchronous motor.

19. The system according to one of claims 9-18, **characterized in that** the gear (42) is realized in the form of a reduction gear, e.g. a bevel gear pair.

20. A method for manufacturing belts of conveyors with steel cable inserts by means of a system according to one of claims 1-19, **characterized in that** the cable tensions of the individual cables are measured and adjusted to a desired nominal value or nominal values in the cable unwinding and tensioning device with consideration of the measuring results.

21. The method according to claim 20, in which the cables are deflected by different angles in the plane of the belt in a spreading comb arranged between the cable unwinding device and the feed device such that the cable tension of individual cables is changed, **characterized in that** the cable tension is adjusted or controlled in the cable unwinding and tensioning device in such a way that the desired production tensions are realized downstream of the guide comb with consideration of the cable tension changes in the guide comb.

## Revendications

1. Installation de fabrication de courroies de transport (1) avec câbles intégrés, par ex. câbles d'acier intégrés, comprenant au moins
- un dispositif de déroulement de câble (5) comprenant plusieurs bobines de câble (9) desquelles les câbles à enchâsser dans la courroie de transport (1), par ex. des câbles d'acier (3), sont déroulés,
- un dispositif de regroupement (6) dans lequel les câbles (3) en effort de traction et parallèles les uns aux autres dans un plan dans le sens longitudinal de la courroie, sont regroupés en une courroie brute (4) avec un ou plusieurs lés de caoutchouc brut (2),
- une presse à vulcanisation (7) dans laquelle la courroie brute (4) est vulcanisée au moyen de pression et/ou de chaleur pour former la courroie de transport (1),
**caractérisée en ce que** le dispositif de déroulement de câble est conçu en tant que dispositif de déroulement et de tension de câble (5), dans lequel chaque câble (3) est tendu individuellement à la tension de production requise,
sachant que les bobines de câble (9) individuelles sont dotées de, respectivement reliées à, au moins un entraînement de tension ou un groupe d'entraînement de tension à moteur électrique, avec lequel le couple de tension requis peut être réglé pour produire la tension de production requise du câble (3),
sachant que le dispositif de déroulement et de tension de câble (5) est doté d'un ou plusieurs dispositif(s) de mesure de traction de câble (10) avec lequel/lesquels l'effort de traction des différents câbles (3) peut être mesuré, sachant que chaque câble (3) a un point de mesure (12),
sachant que le dispositif de déroulement et de tension de câble (5) est doté d'un dispositif de commande et/ou de réglage qui est relié d'une part au dispositif de mesure de traction de câble (10), respectivement aux points de mesure (12), et d'autre part aux entraînements de tension.

2. Installation selon la revendication 1, **caractérisée en ce que** les entraînements de tension sont conçus en tant que moteurs synchrones électriques ou sont dotés de moteurs synchrones électriques, qui sont dotés ou reliés, ensemble ou chacun, au moins à un convertisseur de fréquences.

3. Installation selon la revendication 1 ou 2, comprenant un bâti de déroulement de câble (33) dans lequel les bobines de câble (9) peuvent tourner et sont disposées en étant entraînées par les entraînements de tension, respectivement les groupes d'entraînement de tension, **caractérisée en ce que** le dispositif de mesure de traction de câble (10) est intégré dans le bâti de déroulement de câble (33), est disposé par ex. sur l'extrémité côté sortie du bâti de déroulement de câble (33).

4. Installation selon l'une des revendications 1 à 3, **caractérisée en ce que** les points de mesure (12) sont formés par des palpeurs de mesure (12) correspondant aux différents câbles.

5. Installation selon la revendication 4, **caractérisée en ce que** les palpeurs de mesure sont conçus en tant que disques de mesure (12) ou cylindres de mesure qui sont reliés à ou sont dotés de cellules de mesure de la force.

6. Installation selon la revendication 4 ou 5, **caractérisée en ce que** le dispositif de mesure de traction de câble (10) présente au moins deux cylindres de guidage (11) disposés l'un derrière l'autre dans le sens de transport à la manière d'un triangle de câbles, entre lesquels le palpeur de mesure (12) plonge avec une dimension prédéfinie en appuyant sur les câbles, sachant que la force de rappel produite par le câble respectif peut être mesurée avec les palpeurs de mesure (12).

7. Installation selon l'une des revendications 1 à 6, comprenant un dispositif de passe (18) en aval de la presse à vulcanisation (7), **caractérisée en ce que** les câbles (3) peuvent être tendus à la tension de production avec le dispositif de déroulement et de tension de câble (5), entre le dispositif de déroulement et de tension de câble (5) et le dispositif de passe (18).

8. Installation selon l'une des revendications 1 à 7, **caractérisée en ce qu'**au moins un dispositif d'alignement (14) avec au moins un peigne écarteur (15) modifiant l'écart entre les câbles, est disposé entre le dispositif de déroulement et de tension de câble (5) et le dispositif de regroupement (6), dans lequel les différents câbles (3) sont déviés à différents angles dans le plan de la courroie.

9. Installation selon l'une des revendications 1 à 8, **caractérisée en ce qu'**un groupe d'entraînement (41, 42) présente au moins un moteur (41) et au moins un engrenage (42) avec un arbre de sortie (47), sachant que la bobine de câble (9) est enchâssée directement sur l'arbre de sortie (47) intégré dans l'engrenage (42) et dépassant de l'engrenage (42).

10. Installation selon la revendication 9, **caractérisée en ce que** l'arbre de sortie (47) intégré dans l'engrenage (42) dépasse de l'engrenage (42) d'une longueur prédéfinie (L) qui correspond au moins à la largeur (B) de la bobine de câble (9) ou est plus grande que celle-ci.

11. Installation selon la revendication 9 ou 10, **caractérisée en ce que** l'arbre de sortie (47) est conçu en tant qu'arbre profilé avec une section s'écartant de la forme circulaire, par exemple une section pluri-angulaire, et se met en prise de façon fixe et par complémentarité de forme dans un évidement correspondant de la bobine de câble (9) pour transmettre le couple de rotation.

12. Installation selon la revendication 9 ou 10, **caractérisée en ce que** l'arbre de sortie (47) est conçu en tant qu'arbre lisse non profilé de section ronde, par ex. en acier haute résistance avec une surface lisse.

13. Installation selon l'une des revendications 9 à 12, **caractérisée en ce que** la bobine de câble (9) est fixée ou peut être fixée à l'arbre de sortie (47) par le biais d'un entraîneur (48), en étant fixe en rotation.

14. Installation selon la revendication 13, **caractérisé en ce que** l'entraîneur (48) est fixé par adhérence de force à l'arbre de sortie (47), au moyen d'un élément de serrage (49), par exemple un élément de serrage à collier.

15. Installation selon la revendication 12 ou 14, **caractérisée en ce que** la bobine de câble (9) est fixée par adhérence de formes ou de façon amovible à l'entraîneur (48).

16. Installation selon la revendication 15, **caractérisée en ce que** l'entraîneur (48) présente une ou plusieurs broches (50) disposées de façon excentrique, réparties par exemple de façon excentrique autour de l'arbre, lesquelles s'étendent par exemple dans le sens axial et s'engagent dans des évidements (51) de la bobine de câble (9) disposés de façon excentrique.

17. Installation selon la revendication 16, **caractérisée en ce que** les broches (50) et/ou l'évidement (51) est/sont conçu(e)s conique(s) et présente(nt) une section transversale s'élargissant avec une profondeur croissante.

18. Installation selon l'une des revendications 9 à 17, **caractérisée en ce que** le moteur (41) est conçu en tant que moteur électrique, par exemple un moteur synchrone électrique.

19. Installation selon l'une des revendications 9 à 18, **caractérisée en ce que** l'engrenage (42) est conçu en tant que démultiplicateur, par exemple en tant qu'engrenage à roues coniques.

20. Procédé de fabrication de courroies de transport comprenant des câbles d'acier insérés avec une installation selon l'une des revendications 1 à 19, **caractérisé en ce que** les tensions des différents câbles sont mesurées et réglées à une ou des valeur(s) de consigne souhaitée(s)en tenant compte des résultats de mesure dans le dispositif de déroulement et de tension de câble.

21. Procédé selon la revendication 20, dans lequel les câbles sont déviés différemment dans un peigne d'écartement disposé entre le dispositif de déroulement de câbles et le dispositif d'amenée, par modification de la tension des différents câbles dans le plan de la courroie, **caractérisé en ce que** la tension de câble dans le dispositif de déroulement et de tension de câble est réglée ou régulée avec la mesure, que les tensions de production souhaitées sont données après le peigne de guidage en tenant compte des modifications de tension de câble dans le peigne de guidage.
